# FASCICULE DE BREVET EUROPEEN

(11) **EP 3 592 608 B1**
(45) Date de publication et mention de la délivrance du brevet: **05.05.2021**
(21) Numéro de dépôt: 18712963.0
(22) Date de dépôt: 06.03.2018
(51) Int. Cl.: B60R 5/04

(54) **SYSTEME DE RECOUVREMENT D'UN COMPARTIMENT A BAGAGES DE VEHICULE AUTOMOBILE**
SYSTEM ZUR ABDECKUNG EINES KOFFERRAUMS EINES KRAFTFAHRZEUGS
SYSTEM FOR COVERING A LUGGAGE COMPARTMENT OF A MOTOR VEHICLE

(30) Priorité: 06.03.2017 FR 1751799
(43) Date de publication de la demande: 15.01.2020
(73) Titulaire: TREVES Products, Services & Innovation, 75008 Paris (FR)
(72) Inventeur: LECOMTE, Alicia, 51100 Reims (FR); GUENAMANT, Nicolas, 51100 Reims (FR); BIEVEN, Franck, 51100 Reims (FR); BONFILS, Xavier, 51100 Reims (FR)
(74) Mandataire: Sayettat, Julien Christian
(86) Numéro de dépôt international: PCT/FR2018/050519
(87) Numéro de publication internationale: WO 2018/162844

(56) Documents cités:
- DE-A1-102014 015 894
- DE-U1-202006 018 471
- FR-A1- 3 035 628

## Description

L'invention concerne un système de recouvrement d'un compartiment à bagages de véhicule automobile.

Il est connu de réaliser un système de recouvrement d'un compartiment à bagages de véhicule automobile, ledit système comprenant :
- deux supports latéraux, lesdits supports étant chacun pourvu d'un rail de guidage,
- un panneau fixe de recouvrement de la partie avant dudit compartiment, ledit panneau comprenant une première face supérieure sensiblement plane et horizontale,
- un volet monté coulissant sur lesdits rails de manière à être mobile relativement auxdits supports, ledit volet comprenant une deuxième face supérieure sensiblement plane, ledit volet étant mobile entre :
   o une position de recouvrement dudit compartiment où il est disposé en arrière dudit panneau, lesdites faces s'inscrivant sensiblement dans un même plan,
   o et une position d'accès audit compartiment où ledit volet est déplacé de manière à libérer un accès audit compartiment.

Il est notamment connu que le volet en position d'accès se replie d'un demi-tour sur le panneau, de sorte que leurs faces d'aspect soient disposées l'une sur l'autre DE 10 2014 015894 A , DE 20 2006 01847 U et FR 30356628 A divulguent chacun des différents types de système de recouvrement d'un compartiment à bagages de véhicule automobile.

Avec un tel agencement, le repliement du volet doit être précédé d'un dégagement des deux faces d'aspect de tout objet qui pourrait s'y trouver, ce qui est peu ergonomique.

L'invention a pour but de pallier cet inconvénient.

A cet effet, l'invention propose un système de recouvrement d'un compartiment à bagages de véhicule automobile, ledit système comprenant :
- deux supports latéraux, lesdits supports étant chacun pourvu d'un rail de guidage,
- un panneau fixe de recouvrement de la partie avant dudit compartiment, ledit panneau comprenant une première face supérieure sensiblement plane et horizontale,
- un volet monté coulissant sur lesdits rails de manière à être mobile relativement auxdits supports, ledit volet comprenant une deuxième face supérieure sensiblement plane, ledit volet étant mobile entre :
   o une position de recouvrement dudit compartiment où il est disposé en arrière dudit panneau, lesdites faces s'inscrivant sensiblement dans un même plan,
   o et une position d'accès audit compartiment où ledit volet est déplacé de manière à libérer un accès audit compartiment,
ledit système présentant en outre les caractéristiques suivantes :
- ledit volet est monté de sorte que ladite deuxième face conserve son assiette lors du passage d'une position à l'autre,
- ledit volet en position d'accès est rehaussé et avancé de manière à venir en recouvrement dudit panneau.

Lorsqu'il est dit que la deuxième face conserve son assiette lors du passage d'une position à l'autre, il convient de comprendre que les première et deuxième faces conservent sensiblement leur parallélisme pendant la manipulation du volet de l'une à l'autre de ses positions.

Dans cette description, les termes de positionnement dans l'espace (longitudinal, transversal, latéral, avant, arrière, horizontal, vertical, supérieur, bas,...) sont pris en référence au système en place dans le véhicule.

Avec un tel agencement, le passage du volet de sa position de recouvrement à sa position d'accès peut se faire même si des objets sont déposés sur ledit volet, puisque la deuxième face conserve son assiette lors du passage de l'une à l'autre des positions.

La seule manipulation à effectuer est éventuellement de dégager le panneau d'objets qui pourraient être posés dessus, afin de ne pas gêner la mise du volet en position d'accès.

D'autres particularités et avantages de l'invention apparaîtront dans la description qui suit, faite en référence aux figures jointes, dans lesquelles :
- les figures 1a et 1b sont des vues schématiques en perspective partielle d'un système à actionnement manuel, selon une première réalisation, le volet étant disposé en position d'accès (figure 1a) et de recouvrement (figure 1b),
- la figure 2 est un agrandissement de détail de la figure 1a réalisé au niveau d'une bifurcation,
- la figure 3 est une vue en coupe transversale verticale réalisée au niveau de la bifurcation lors du passage d'un doigt arrière à son aplomb,
- la figure 4 est une vue schématique en perspective d'un système à actionnement motorisé, selon une deuxième réalisation, le volet étant disposé en position de recouvrement,
- la figure 5 est une vue latérale schématique partielle d'un premier mode de mise en œuvre d'un système motorisé,
- la figure 6 est une vue latérale schématique partielle d'un deuxième mode de mise en œuvre d'un système motorisé,
- la figure 7 est une vue latérale schématique partielle d'un troisième mode de mise en œuvre d'un système motorisé.

En référence aux figures, on décrit un système 1 de recouvrement d'un compartiment à bagages de véhicule automobile, ledit système comprenant :
- deux supports latéraux 2, lesdits supports étant chacun pourvu d'un rail 3 de guidage,
- un panneau fixe 5 de recouvrement de la partie avant dudit compartiment, ledit panneau comprenant une première face 6 supérieure sensiblement plane et horizontale,
- un volet 7 monté coulissant sur lesdits rails de manière à être mobile relativement auxdits supports, ledit volet comprenant une deuxième face 8 supérieure sensiblement plane, ledit volet étant mobile entre :
   o une position de recouvrement dudit compartiment où il est disposé en arrière dudit panneau, lesdites faces s'inscrivant sensiblement dans un même plan,
   o et une position d'accès audit compartiment où ledit volet est déplacé de manière à libérer un accès audit compartiment, ledit système présentant en outre les caractéristiques suivantes :
- ledit volet est monté de sorte que ladite deuxième face conserve son assiette lors du passage d'une position à l'autre,
- ledit volet en position d'accès est rehaussé et avancé de manière à venir en recouvrement dudit panneau.

Selon les réalisations représentées :
- le volet 7 est pourvu sur chacun de ses bords latéraux d'un moyen de soutien avant 20 saillant latéralement de l'extrémité avant dudit bord et d'un moyen de soutien arrière 21 saillant latéralement de l'extrémité arrière dudit bord, lesdits moyens coulissant sur le rail 3 correspondant,
- ledit rail s'étend longitudinalement et présente :
   o une partie extrême arrière 23 recourbée vers le bas, ladite partie étant destinée à recevoir ledit moyen arrière quand ledit volet est en position de recouvrement,
   o et une bifurcation médiane 24, de géométrie analogue à ladite partie extrême en vue latérale, ladite bifurcation étant destinée à recevoir ledit moyen avant quand ledit volet est en position de recouvrement.

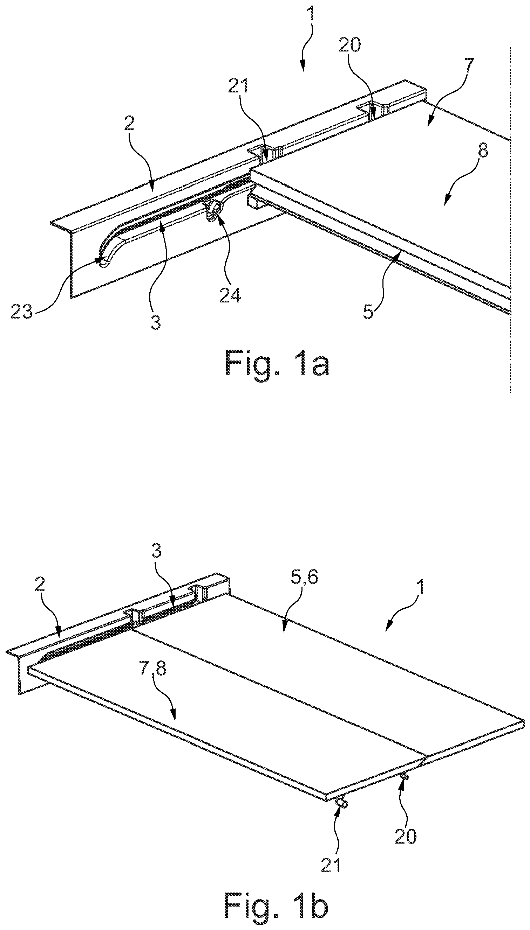

Selon la première réalisation, représentée en figures 1 à 3, les moyens de soutien 20,21 sont sous forme de doigts transversaux, de manière à permettre un actionnement manuel du volet 7 de l'une à l'autre de ses positions, un rail 3 étant conformé en tranchée de réception desdits doigts en coulissement.

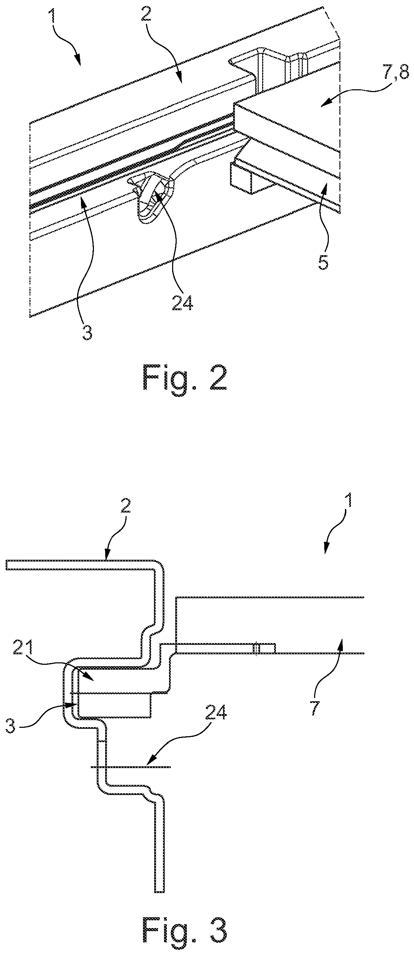

En particulier, comme illustré en figure 3, le doigt arrière 21 est en saillie accentuée par rapport au doigt avant 20, la bifurcation 24 présentant une profondeur permettant de recevoir ledit doigt avant tout en empêchant la réception dudit doigt arrière.

Un tel agencement permet, lors du passage du volet 7 de sa position d'accès à sa position de recouvrement, que le doigt arrière 21 soit guidé vers la partie extrême arrière 23 sans risquer de se trouver engagé dans la bifurcation 24, ladite bifurcation étant en revanche apte à recevoir le doigt avant 20.

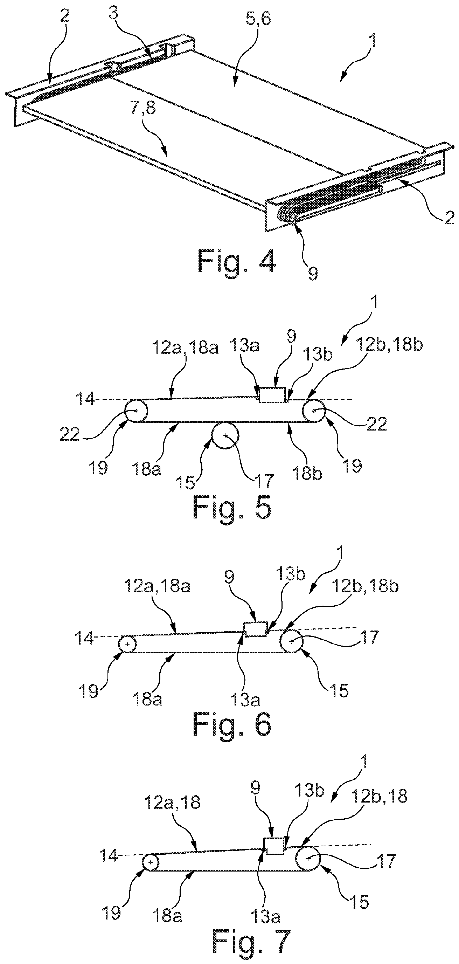

Selon la deuxième réalisation, représentée en figures 4 à 7, les moyens de soutien arrière 21, ou avant 20 en variante non représentée, sont montés par l'intermédiaire d'un chariot 9 coulissant sur le rail 3 correspondant, lesdits moyens de soutien étant notamment sous forme de doigts s'emboitant dans ledit chariot, ledit chariot étant actionnable par un moteur respectif, non représenté, monté sur le support 2 correspondant, de manière à permettre un déplacement motorisé du volet 7.

Selon les modes de mise en œuvre d'un système motorisé représentés en figures 5 à 7, le système 1 présente latéralement de part et d'autre les caractéristiques suivantes :
- un chariot 9 est monté entre un premier 12a et un deuxième 12b tronçon de câble présentant chacun une extrémité 13a,13b associée respectivement de part et d'autre dudit chariot, lesdits tronçons étant maintenus en tension permanente selon un axe longitudinal 14, au moins un desdits tronçons présentant une aptitude à la déformation élastique de manière à permettre un débattement dudit chariot vers le bas lors de la mise du volet 7 en position de recouvrement,
- une roue 15 actionnée par un moteur, non représenté, est solidarisée auxdits tronçons de manière à permettre l'actionnement en traction longitudinale de l'un ou l'autre desdits tronçons au choix, afin de déplacer ledit chariot vers l'avant ou vers l'arrière pour amener ledit volet en position d'accès ou de recouvrement.

Selon les modes de réalisation des figures 5 et 6, une roue 15 comprend deux rainures, non représentées, s'étageant axialement par rapport à son axe de rotation transversal 17, chacune desdites rainures recevant en enroulement un premier 18a et un deuxième 18b câble respectif définissant respectivement les premier 12a et deuxième 12b tronçons de câble, lesdits câbles s'enroulant selon deux sens opposés dans lesdites rainures de sorte que la mise en rotation de ladite roue réalise un enroulement de l'un et un déroulement correspondant de l'autre.

On précise ici que, dans toute cette description, lorsqu'il est dit que la mise en rotation de la roue 15 réalise un enroulement d'un câble 18a,18b et un déroulement correspondant de l'autre câble 18b,18a, cela signifie que la longueur enroulée de l'un est égale à la longueur déroulée de l'autre.

Selon le mode de réalisation de la figure 5 :
- un support 2 est pourvu de deux poulies 19 montées en extrémités respectives de course du chariot 9, lesdites poulies étant montées en rotation selon deux axes transversaux respectifs 22,
- une roue 15 est disposée sensiblement entre lesdites poulies, chacune desdites poulies formant un renvoi pour chacun des câbles 18a,18b de manière à maintenir les tronçons 12a,12b en tension permanente.

Selon le mode de réalisation de la figure 6, le système 1 comprend une poulie 19 montée sur le support 2 en une extrémité de course du chariot 9, la roue 15 étant disposée en l'autre extrémité de ladite course, ladite poulie formant un renvoi pour l'un des câbles 18a de manière à maintenir lesdits tronçons 12a,12b en tension permanente.

Selon le mode de réalisation de la figure 7, la roue 15 comprend une rainure, non représentée, de réception d'un câble 18, les parties extrêmes dudit câble définissant les premier 12a et deuxième 12b tronçons de câble, ledit système comprenant en outre une poulie 19 montée sur le support 2 en une extrémité de course du chariot 9, ladite roue étant disposée en l'autre extrémité de ladite course, de sorte que ledit câble forme une boucle tendue passant autour de ladite roue et de ladite poulie de manière à maintenir lesdits tronçons en tension permanente.

On est ici dans un système à friction, le câble 18 étant entraîné par la roue 15 par friction, et non par enroulement comme c'est le cas dans les modes de réalisation décrits avant.

Selon un mode de réalisation applicable à toutes les réalisations motorisées précédemment décrites, le système 1 comprend en outre un dispositif, notamment électronique, de synchronisation du déclenchement des moteurs, de manière à permettre un actionnement optimal du volet 7 de l'une à l'autre de ses positions.

## Revendications

1. Système (1) de recouvrement d'un compartiment à bagages de véhicule automobile, ledit système comprenant :
• deux supports (2) latéraux, lesdits supports étant chacun pourvu d'un rail (3) de guidage,
• un panneau (5) fixe de recouvrement de la partie avant dudit compartiment, ledit panneau comprenant une première face (6) supérieure sensiblement plane et horizontale,
• un volet (7) monté coulissant sur lesdits rails de manière à être mobile relativement auxdits supports, ledit volet comprenant une deuxième face (8) supérieure sensiblement plane, ledit volet étant mobile entre :
o une position de recouvrement dudit compartiment où il est disposé en arrière dudit panneau, lesdites faces s'inscrivant sensiblement dans un même plan,
o et une position d'accès audit compartiment où ledit volet est déplacé de manière à libérer un accès audit compartiment,
ledit système étant **caractérisé en ce que** :
• ledit volet est monté de sorte que ladite deuxième face conserve son assiette lors du passage d'une position à l'autre,
• ledit volet en position d'accès est rehaussé et avancé de manière à venir en recouvrement dudit panneau.

2. Système selon la revendication 1, **caractérisé en ce que** :
• le volet (7) est pourvu sur chacun de ses bords latéraux d'un moyen de soutien avant (20) saillant latéralement de l'extrémité avant dudit bord et d'un moyen de soutien arrière (21) saillant latéralement de l'extrémité arrière dudit bord, lesdits moyens coulissant sur le rail (3) correspondant,
• ledit rail s'étend longitudinalement et présente :
∘ une partie extrême arrière (23) recourbée vers le bas, ladite partie étant destinée à recevoir ledit moyen arrière quand ledit volet est en position de recouvrement,
∘ et une bifurcation médiane (24), de géométrie analogue à ladite partie extrême en vue latérale, ladite bifurcation étant destinée à recevoir ledit moyen avant quand ledit volet est en position de recouvrement.

3. Système selon la revendication 2, **caractérisé en ce que** les moyens de soutien (20,21) sont sous forme de doigts transversaux, de manière à permettre un actionnement manuel du volet (7) de l'une à l'autre de ses positions, un rail (3) étant conformé en tranchée de réception desdits doigts en coulissement.

4. Système selon la revendication 3, **caractérisé en ce que** le doigt arrière (21) est en saillie accentuée par rapport au doigt avant (20), la bifurcation (24) présentant une profondeur permettant de recevoir ledit doigt avant tout en empêchant la réception dudit doigt arrière.

5. Système selon la revendication 2, **caractérisé en ce que** les moyens de soutien arrière (21) ou avant (20) sont montés par l'intermédiaire d'un chariot (9) coulissant sur le rail (3) correspondant, ledit chariot étant actionnable par un moteur respectif monté sur le support (2) correspondant, de manière à permettre un déplacement motorisé du volet (7).

6. Système selon la revendication 5, **caractérisé en ce qu'**il présente latéralement de part et d'autre les caractéristiques suivantes :
• un chariot (9) est monté entre un premier (12a) et un deuxième (12b) tronçon de câble présentant chacun une extrémité (13a,13b) associée respectivement de part et d'autre dudit chariot, lesdits tronçons étant maintenus en tension permanente selon un axe longitudinal (14), au moins un desdits tronçons présentant une aptitude à la déformation élastique de manière à permettre un débattement dudit chariot vers le bas lors de la mise du volet (7) en position de recouvrement,
• une roue (15) actionnée par un moteur est solidarisée auxdits tronçons de manière à permettre l'actionnement en traction longitudinale de l'un ou l'autre desdits tronçons au choix, afin de déplacer ledit chariot vers l'avant ou vers l'arrière pour amener ledit volet en position d'accès ou de recouvrement.

7. Système selon la revendication 6, **caractérisé en ce qu'**une roue (15) comprend deux rainures s'étageant axialement par rapport à son axe de rotation transversal (17), chacune desdites rainures recevant en enroulement un premier (18a) et un deuxième (18b) câble respectif définissant respectivement les premier (12a) et deuxième (12b) tronçons de câble, lesdits câbles s'enroulant selon deux sens opposés dans lesdites rainures de sorte que la mise en rotation de ladite roue réalise un enroulement de l'un et un déroulement correspondant de l'autre.

8. Système selon la revendication 7 **caractérisé en ce que** :
• un support (2) est pourvu de deux poulies (19) montées en extrémités respectives de course du chariot (9), lesdites poulies étant montées en rotation selon deux axes transversaux respectifs (22),
• une roue (15) est disposée sensiblement entre lesdites poulies, chacune desdites poulies formant un renvoi pour chacun des câbles (18a,18b) de manière à maintenir les tronçons (12a,12b) en tension permanente.

9. Système selon la revendication 7, **caractérisé en ce qu'**il comprend une poulie (19) montée sur le support (2) en une extrémité de course du chariot (9), la roue (15) étant disposée en l'autre extrémité de ladite course, ladite poulie formant un renvoi pour l'un des câbles (18a) de manière à maintenir lesdits tronçons (12a,12b) en tension permanente.

10. Système selon la revendication 6, **caractérisé en ce que** la roue (15) comprend une rainure de réception d'un câble (18), les parties extrêmes dudit câble définissant les premier (12a) et deuxième (12b) tronçons de câble, ledit système comprenant en outre une poulie (19) montée sur le support (2) en une extrémité de course du chariot (9), ladite roue étant disposée en l'autre extrémité de ladite course, de sorte que ledit câble forme une boucle tendue passant autour de ladite roue et de ladite poulie de manière à maintenir lesdits tronçons en tension permanente.

## Patentansprüche

1. System (1) zur Abdeckung eines Kofferraums eines Kraftfahrzeugs, wobei das System umfasst:
• zwei seitliche Träger (2), wobei jeder Träger mit einer Führungsschiene (3) ausgestattet ist,
• eine feste Abdeckplatte (5) des vorderen Teils des Raums, wobei die Platte eine erste etwa ebene und horizontale obere Fläche (6) umfasst,
• eine Klappe (7), die auf den Schienen derart gleitend angebracht ist, dass sie im Verhältnis zu den Trägern beweglich ist, wobei die Klappe eine zweite etwa ebene obere Fläche (8) umfasst, wobei die Klappe beweglich ist zwischen:
∘ einer Abdeckposition des Raums, in der sie hinter der Platte angeordnet ist, wobei die Flächen in etwa derselben Ebene liegen,
**∘** und einer Zugangsposition zu dem Raum, in der die Klappe derart verlagert ist, dass ein Zugang zu dem Raum freigegeben wird,
wobei das System **dadurch gekennzeichnet ist, dass**:
• die Klappe derart angebracht ist, dass die zweite Fläche beim Übergang von einer Position in die andere ihren Sitz beibehält,
• die Klappe in Zugangsposition angehoben und derart vorverlagert ist, dass sie die Platte abdeckt.

2. System nach Anspruch 1, **dadurch gekennzeichnet, dass**:
• die Klappe (7) an jedem ihrer Seitenränder mit einem vorderen Stützmittel (20) ausgestattet ist, das seitlich aus dem vorderen Ende des Randes hervorragt, und mit einem hinteren Stützmittel (21), das seitlich aus dem hinteren Ende des Randes hervorragt, wobei die Mittel auf der entsprechenden Schiene (3) gleiten,
• sich die Schiene längs erstreckt und aufweist:
∘ einen nach unten gekrümmten hinteren Endteil (23), wobei der Teil bestimmt ist, das hintere Mittel aufzunehmen, wenn die Klappe in Abdeckposition ist,
∘ und eine mittlere Gabelung (24) mit analoger Geometrie zu dem Endteil in Seitenansicht, wobei die Gabelung bestimmt ist, das vordere Mittel aufzunehmen, wenn die Klappe in Abdeckposition ist.

3. System nach Anspruch 2, **dadurch gekennzeichnet, dass** die Stützmittel (20, 21) in Form transversaler Finger vorliegen, so dass eine manuelle Betätigung der Klappe (7) von der einen in die andere ihrer Positionen gestattet ist, wobei eine Schiene (3) als Aufnahmenut der gleitenden Finger ausgebildet ist.

4. System nach Anspruch 3, **dadurch gekennzeichnet, dass** der hintere Finger (21) in Bezug auf den vorderen Finger (20) akzentuiert hervorsteht, wobei die Gabelung (24) eine Tiefe aufweist, die gestattet, den vorderen Finger bei Verhinderung der Aufnahme des hinteren Fingers aufzunehmen.

5. System nach Anspruch 2, **dadurch gekennzeichnet, dass** die hinteren (21) oder vorderen (20) Stützmittel mittels eines auf der entsprechenden Schiene (3) gleitenden Schlittens (9) angebracht sind, wobei der Schlitten von einem jeweiligen Motor betätigbar ist, der auf dem entsprechenden Träger (2) angebracht ist, so dass eine motorisierte Verlagerung der Klappe (7) gestattet ist.

6. System nach Anspruch 5, **dadurch gekennzeichnet, dass** es seitlich beiderseits die folgenden Merkmale aufweist:
• ein Schlitten (9) ist zwischen einem ersten (12a) und einem zweiten (12b) Kabelabschnitt angebracht, von denen jeder ein Ende (13a, 13b) aufweist, das jeweils beiderseits des Schlittens zugeordnet ist, wobei die Abschnitte gemäß einer Längsachse (14) in ständiger Spannung gehalten werden, wobei mindestens einer der Abschnitte eine Fähigkeit zur elastischen Verformung aufweist, so dass beim Verbringen der Klappe (7) in Abdeckposition eine Auslenkung des Schlittens nach unten gestattet ist,
• ein von einem Motor betätigtes Rad (15) ist mit den Abschnitten fest verbunden, so dass die wahlweise Längszugbetätigung von dem einen oder dem anderen der Abschnitte gestattet ist, um den Schlitten nach vorn oder nach hinten zu verlagern, um die Klappe in Zugangs- oder Abdeckposition zu führen.

7. System nach Anspruch 6, **dadurch gekennzeichnet, dass** ein Rad (15) zwei Rillen umfasst, die axial in Bezug auf seine transversale Rotationsachse (17) etagenförmig aufgebaut sind, wobei jede der Rillen ein erstes (18a) und ein zweites (18b) jeweiliges Kabel gewickelt aufnimmt, die jeweils den ersten (12a) und zweiten (12b) Kabelabschnitt definieren, wobei sich die Kabel in zwei entgegengesetzten Richtungen in den Rillen aufwickeln, so dass das Inrotationversetzen des Rads ein Aufwickeln des einen und ein entsprechendes Abwickeln des anderen bewirkt.

8. System nach Anspruch 7, **dadurch gekennzeichnet, dass**:
• ein Träger (2) mit zwei Rollen (19) ausgestattet ist, die an entsprechenden Laufenden des Schlittens (9) angebracht sind, wobei die Rollen gemäß zwei jeweiligen transversalen Achsen (22) rotatorisch angebracht sind,
• ein Rad (15) etwa zwischen den Rollen angeordnet ist, wobei jede der Rollen eine Umlenkung für jedes der Kabel (18a, 18b) bildet, so dass die Abschnitte (12a, 12b) in ständiger Spannung gehalten werden.

9. System nach Anspruch 7, **dadurch gekennzeichnet, dass** es eine Rolle (19) umfasst, die auf dem Träger (2) an einem Laufende des Schlittens (9) angebracht ist, wobei das Rad (15) am anderen Laufende angeordnet ist, wobei die Rolle eine Umlenkung für eins der Kabel (18a) bildet, so dass die Abschnitte (12a, 12b) in ständiger Spannung gehalten werden.

10. System nach Anspruch 6, **dadurch gekennzeichnet, dass** das Rad (15) eine Aufnahmerille eines Kabels (18) umfasst, wobei die Endteile des Kabels den ersten (12a) und zweiten (12b) Kabelabschnitt definieren, wobei das System ferner eine Rolle (19) umfasst, die auf dem Träger (2) an einem Laufende des Schlittens (9) angebracht ist, wobei das Rad am anderen Laufende angebracht ist, so dass das Kabel eine gespannte Schleife bildet, die um das Rad und die Rolle verläuft, so dass die Abschnitte in ständiger Spannung gehalten werden.

## Claims

1. System (1) for covering a luggage compartment of a motor vehicle, said system comprising:
- two lateral supports (2), said supports each being provided with a guide rail (3),
- a stationary panel (5) covering the front part of said compartment, said panel comprising a first substantially planar and horizontal upper face (6),
- a flap (7) mounted so as to slide on said rails so as to be movable relative to said supports, said flap comprising a second substantially planar upper face (8), said flap being movable between:
-- a position for covering said compartment in which it is arranged behind said panel, said faces lying substantially in the same plane,
-- and a position for accessing said compartment in which said flap is moved so as to allow free access to said compartment,
said system being **characterised in that**:
- said flap is mounted so that said second face keeps its attitude during the transition from one position to the other,
- said flap in the access position is raised and moved forward so as to cover said panel.

2. System according to claim 1, **characterised in that**:
- the flap (7) is provided, on each of the lateral edges thereof, with a front support means (20) projecting laterally from the front end of said edge and with a rear support means (21) projecting laterally from the rear end of said edge, said means sliding on the corresponding rail (3),
- said rail extends longitudinally and has:
-- a downwardly curved rear end part (23), said part being intended to receive said rear means when said flap is in the covering position,
-- and a middle bifurcation (24), with a form similar to that of said end part in lateral view, said bifurcation being intended to receive said front means when said flap is in the covering position.

3. System according to claim 2, **characterised in that** the support means (20, 21) are in the form of transverse fingers, so as to allow manual actuation of the flap (7) from one of its positions to the other, a rail (3) being formed as a trench for receiving said sliding fingers.

4. System according to claim 3, **characterised in that** the rear finger (21) projects in an accentuated fashion with respect to the front finger (20), the bifurcation (24) having a depth making it possible to receive said front finger while preventing reception of said rear finger.

5. System according to claim 2, **characterised in that** the rear support means (21) or front support means (20) are mounted by means of a carriage (9) sliding on the corresponding rail (3), said carriage being actuatable by a respective motor mounted on the corresponding support (2), so as to allow motorised movement of said flap (7).

6. System according to claim 5, **characterised in that** it has laterally on either side the following features:
- a carriage (9) is mounted between a first (12a) and second (12b) cable portion each having an end (13a, 13b) associated respectively on either side of said carriage, said portions being kept under permanent tension on a longitudinal axis (14), at least one of said portions being suitable for elastic deformation so as to allow a movement of said carriage downwards when the flap (7) is put in the covering position,
- a wheel (15) actuated by a motor is secured to said portions so as to allow actuation, under longitudinal traction, of one or other of said portions as required, in order to move said carriage forwards or backwards in order to bring said flap into the access or covering position.

7. System according to claim 6, **characterised in that** a wheel (15) comprises two grooves arranged axially with respect to its transverse rotation axis (17), each of said grooves receiving, so as to be wound, a respective first (18a) and second (18b) cable defining respectively the first (12a) and second (12b) cable portions, said cables being wound in two opposite directions in said grooves so that rotating said wheel effects a winding of one and a corresponding unwinding of the other.

8. System according to claim 7, **characterised in that**:
- a support (2) is provided with two pulleys (19) mounted at respective ends of travel of the carriage (9), said pulleys being mounted so as to rotate on two respective transverse axes (22),
- a wheel (15) is disposed substantially between said pulleys, each of said pulleys forming a return for each of the cables (18a, 18b) so as to keep the portions (12a, 12b) under permanent tension.

9. System according to claim 7, **characterised in that** it comprises a pulley (19) mounted on the support (2) at an end of travel of the carriage (9), the wheel (15) being disposed at the other end of said travel, said pulley forming a return for one of the cables (18a) so as to keep said portions (12a, 12b) under permanent tension.

10. System according to claim 6, **characterised in that** the wheel (15) comprises a groove for receiving a cable (18), the end parts of said cable defining the first (12a) and second (12b) cable portions, said system further comprising a pulley (19) mounted on the support (2) at an end of travel of the carriage (9), said wheel being disposed at the other end of said travel, so that said cable forms a tensioned loop passing around said wheel and said pulley so as to keep said portions under permanent tension.
